# EUROPÄISCHE PATENTSCHRIFT

(11) **EP 3 083 176 B1**
(45) Veröffentlichungstag und Bekanntmachung des Hinweises auf die Patenterteilung: **18.07.2018**
(21) Anmeldenummer: 14821160.0
(22) Anmeldetag: 19.12.2014
(51) Int. Cl.: B29C 31/04, B29C 44/44

(54) **INJEKTOR ZUM BEFÜLLEN EINER FORM MIT KUNSTSTOFFPARTIKELN**
INJECTOR FOR FILLING A MOLD WITH PLASTIC PARTICLES
INJECTEUR SERVANT À REMPLIR UN MOULE DE PARTICULES DE MATIÈRE PLASTIQUE

(30) Priorität: 19.12.2013 DE 102013114570
(43) Veröffentlichungstag der Anmeldung: 26.10.2016
(73) Patentinhaber: Kurtz GmbH, 97892 Kreuzwertheim (DE)
(72) Erfinder: REUBER, Norbert, 97851 Bergrothenfels (DE)
(74) Vertreter: Patronus IP Patent- und Rechtsanwälte
(86) Internationale Anmeldenummer: PCT/EP2014/078645
(87) Internationale Veröffentlichungsnummer: WO 2015/091906

(56) Entgegenhaltungen:
- DE-A1-102009 024 278
- JP-A- H08 174 551
- JP-U- H0 568 633
- JP-U- S5 270 166

## Beschreibung

Die vorliegende Erfindung betrifft einen Injektor zum Befüllen einer Form mit Kunststoffpartikeln, eine Vorrichtung zur Herstellung eines Partikelschaumstoffteils und ein Verfahren zum Herstellen eines Partikelschaumstoffteils.

Aus der DE 38 31 600 C1 sind ein Verfahren und eine Vorrichtung zum Einfüllen von thermoplastischen Schaumstoffpartikeln in das Formnest eines Formwerkzeugs bekannt, wobei es je nach Bedarf vor allem möglich sein soll, aus einem Vorratsbehälter thermoplastische Schaumstoffpartikel, nämlich treibmittelhaltige Schaumstoffpartikel, sowohl unter atmosphärischem Druck als auch mit Überdruck in ein entlüftetes Formwerkzeug zu füllen sowie auf nicht blähfähige, kompressible Schaumstoffpartikel mit Überdruck in ein unter gleich hohem Druck stehendes Formwerkzeug zu füllen und dabei Druckluft einzusparen und die Füllzeit zu verkürzen. Dies wird dadurch erreicht, dass die nach Beenden des Füllvorgangs in den Füllinjektoren und in den Zuführungsleitungen verbliebenen Schaumstoffpartikel in einen von dem Vorratsbehälter unabhängigen, nicht unter Druck stehenden weiteren Behälter zurück geblasen werden. Zum Einfüllen der Schaumstoffpartikel in das Formnest dient ein Füllinjektor, mit dessen Verschlusskolben die Zuführöffnung des Formnestes wahlweise verschlossen oder geöffnet werden kann. Über ein 2/2-Wegeventil wird Druckluft aus einer Druckluftquelle durch innerhalb des Füllinjektors angebrachte Injektordüsen gepresst, wodurch Schaumstoffpartikel über Zuführungsleitungen ein Verteilergehäuse und ein Verschlussorgan aus der Ablauföffnung eines Vorratsbehälters angesaugt und durch die Zuführöffnung in das Formnest gedrückt werden, wenn der Verschlusskolben zurückgezogen ist. Dieser wird über ein 3/2-Wegeventil mit Druckluft betätigt.

Aus der DE 197 47 645 A1 ist ebenfalls ein Verfahren zum Herstellen eines Schaumstoffkörpers und der Schaumstoffkörper bekannt, wobei auch hier Partikelschäume verarbeitet werden und das Formnest mit Schaumstoffpartikeln einer vorgegebenen Körnung befüllt wird. Das Befüllen erfolgt über einen oder mehrere Füller, die als Injektoren ausgebildet sind und die mit Druckluft beaufschlagt sind. Die Schaumstoffpartikel werden aus einem nicht dargestellten Vorratsbehälter angesaugt und mittels der Druckluft in das Formnest eingeblasen. Um eine gute Befüllung zu erhalten, wird während dieses Vorgangs das Formnest entlüftet.

Die Verwendung von Füllinjektoren ist auch aus der DE 10 2008 016 883 A1 bekannt.

Die DE 299 19 328 U1 betrifft einen Füllinjektor für Hartschaumstoff-Formteilautomaten und die DE 79 28 606 U1 betrifft ebenfalls einen Füllinjektor, insbesondere zum Fördern von vorgeschäumten, noch blähfähigen, kleinteiligen Styrolpolymerisaten. Bei diesen beiden Füllinjektoren weist eine Kolbenstange einen geringeren Durchmesser als der Kolben auf.

Die WO 2013/182555 A1 betrifft ein Verfahren zum Transport geschäumter thermoplastischer Polymerpartikel aus einem Behälter durch mindestens eine Rohrleitung, wobei zum Transport der geschäumten thermoplastischen Polymerpartikel ein Gasstrom durch die Rohrleitung angelegt wird und die geschäumten thermoplastischen Polymerpartikel mit einem Wasser enthaltenden Gleitmittel benetzt werden. Das Gleitmittel soll Wasser enthalten. Der erforderliche Druck wird mittels Luft oder Stickstoff erzeugt.

Die für derartige Verfahren verwendeten Schaumstoffpartikel, insbesondere Schaumstoffpartikel aus ETPU, weisen eine vergleichsweise hohe gegenseitige Adhäsionskraft auf, sodass ein Aneinanderkleben der Schaumstoffpartikel erfolgen kann, welches insbesondere die Dosierung, Förderung und Füllung beeinträchtigen kann.

Injektoren zum Befüllen von Formwerkzeugen mit Schaumstoffpartikeln und insbesondere den genannten ETPU-Partikeln bestehen aus einem Vorderteil und einem axial in Förderrichtung dahinter angeordneten Basisteil. Das Vorderteil besteht im Wesentlichen aus zwei konzentrischen Zylindern, wobei ein innerer Zylinder im Bereich eines freien Endes eine Mündung ausbildet, welche in ein Formwerkzeug mündet und an einem gegenüberliegenden Ende einen separat angesetzten Füllstutzen besitzt, welcher mit einem Speicher für Kunststoffpartikel verbunden ist. Das zweite konzentrische äußere zylindrische Rohr dient der Führung von Druckluft, welche im Bereich der Mündung in das innere zylindrische Rohr einmündet und eine Düse bildet, welche nach dem Venturi-Prinzip arbeitet, wobei die Druckluft in eine Form einströmt und dabei die Kunststoffpartikel aus dem Kunststoffpartikelspeicher durch den Füllstutzen und das innere zylindrische Rohr ansaugt.

Das Basisteil umfasst einen pneumatischen Antrieb, vor den ein Führungsteil gesetzt ist, in dem ein von der Pneumatikeinheit antreibbarer Kolben gelagert ist, wobei der Kolben vorder- . seitig in einer Kolbenführung gelagert ist und eine Kolbenstange vorhanden ist, welche einen Durchmesser besitzt, der geringer ist als der des Kolbens und die Kolbenstange mit einer Führungseinrichtung im Führungsteil gelagert ist, wobei durch Betätigung des pneumatischen Antriebes die Kolbenstange aus dem Führungsteil mit dem davor befindlichen Kolben ausfahrbar ist. Vorderteil und Basisteil sind über Schraubverbindungen fest miteinander verbunden, wobei der Kolben durch Betätigung des pneumatischen Antriebes durch das innere zylindrische Rohr zur Mündung geführt werden kann, um diese injektorseitig zu verschließen und eine Rückströmung von Dampf zu verhindern, wenn die Kunststoffpartikel in der Form be- bzw. verarbeitet werden und gegebenenfalls die Form geschlossen wird.

In der DE 10 2009 024 278 A1 ist eine Füllvorrichtung zum Füllen einer Form mit Kunststoffpartikeln aus thermoplastischem Kunststoff offenbart. Hierbei ist ein Betätigungskolben vorgesehen, der mit einem Schließkolben verbunden ist und diesen bewegen kann. Der Betätigungskolben weist hierbei eine konturierte Mantelwandung auf, in der sich in Längsrichtung erstreckende Luftführungen ausgebildet sind. In einer Öffnungsstellung ist der Schließkolben in einen Luftkanal eingefahren. Der Schließkolben ist derart dimensioniert, dass zwischen dem Schließkolben und dem Luftkanal ein Ringkanal ausgebildet ist, der als Austrittsdüse wirkt. Durch diese Austrittsdüse wird Luft geführt, die in eine Durchlass strömt.

Die JP 08174551 A offenbart einen Injektor zum Befüllen einer Form mit Kunststoffpartikeln mit einem Vorderteil und einer damit verbunden Kolbenzylindereinheit. Das Vorderteil weist einen Leitungsabschnitt zum Zuführen von Druckluft auf. Weiterhin ist eine Zuführung für Kunststoffpartikel vorgesehen. Ein Schließkolben der Kolbenzylindereinheit und die den Schließkolben tragende Kolbenstange sind in etwa durchmessergleich ausgebildet.

Aus der JP S52 70166 U 25 geht eine Zuführeinrichtung für verschieden farbige Kunststoffpartikel hervor. Diese Zuführeinrichtung ist als eine Art Injektor ausgebildet, wobei mehrere Ansaugöffnungen - vorgesehen sind über die verschieden farbige Kunststoffpartikel ansaugbar sind. Diese Ansaugöffnung - münden in einen Innenraum. An diesem Innenraum ist eine Druckluftversorgung angeschlossen, weiterhin ist eine Art Injektorrohr vorgesehen. Zudem weist die Vorrichtung einen Schließkolben auf, der mittels eines entsprechenden Zylinders betätigbar ist. Der Schließkolben ist mit einer Kolbenstange (kein Bezugszeichen) verbunden. Der Schließkolben und die entsprechende Kolbenstangen sind in eine Kolbenstangenführung einziehbar. Der Schließkolben und die Kolbenstange weisen einen unterschiedlichen Durchmesser auf.

Aus der JP H0568633 U geht ebenfalls ein Füllinjektor hervor.

Aufgabe der Erfindung ist es, einen Injektor zu schaffen, welcher robuster und leichter zu warten ist und zudem flexibler ist.

Die Aufgabe wird mit einem Injektor mit den Merkmalen des Anspruchs 1 gelöst.

Vorteilhafte Weiterbildungen sind in den hiervon abhängigen Unteransprüchen gekennzeichnet.

Es ist eine weitere Aufgabe eine Vorrichtung zum Herstellen eines Partikelschaumstoffteils zu schaffen, mit welchen ein Formwerkzeug zuverlässig und vollständig mit Schaumstoffpartikeln gefüllt wird, selbst wenn die Schaumstoffpartikel hohe gegenseitige Adhäsionskräfte aufweisen, wie es beispielsweise bei Schaumstoffpartikeln auf Polyurethanbasis der Fall ist.

Diese Aufgabe wird mit einer Vorrichtung mit den Merkmalen des Anspruchs 6 gelöst.

Es ist zudem eine Aufgabe ein Verfahren zur Herstellung eines Partikelschaumstoffteils zu schaffen, mit welchen ein Formwerkzeug zuverlässig und vollständig mit Schaumstoffpartikeln gefüllt wird, selbst wenn die Schaumstoffpartikel hohe gegenseitige Adhäsionskräfte aufweisen, wie es beispielsweise bei Schaumstoffpartikeln auf Polyurethanbasis der Fall ist.

Die Aufgabe wird mit einem Verfahren mit den Merkmalen des Anspruchs 7 gelöst.

Vorteilhafte Weiterbildungen sind in den hiervon abhängigen Unteransprüchen gekennzeichnet.

Erfindungsgemäß wurde erkannt, dass durch eine Kolbenstange, die im Durchmesser geringer ist als der Verschlusskolben für die Mündung, gefördertes Kunststoffpartikelmaterial, welches nach dem Verschließen der Mündung des Vorderteils noch in dem Förderrohrbereich verblieben ist, es zu Agglomerationen von gefördertem Material um die Kolbenstange herum kommen kann, welches sich beim Zurückziehen des Kolbens dann an der Kolbenrückseite sammelt und entweder in den Führungsbereich des Basisteils gezogen wird oder den Rückzug des Kolbens in die Kolbenführung des Basisteils behindert oder unmöglich macht. Derartige Verschmutzungen machen ein häufiges Warten und Reinigen insbesondere des Führungsteils, des Basisteils, notwendig. Dass es zu solchen Verschmutzungen kommt, konnte ursprünglich nicht erkannt werden, da das Kunststoffpartikelmaterial üblicherweise durch einen verbleibenden Randspalt zwischen dem Kolben und der Wandung des Förderrohres hindurchtreten kann.

Erfindungsgemäß wird die Kolbenstange in gleicher Stärke bzw. in gleichem Durchmesser wie der Kolben bzw. der Schließkolben selbst ausgebildet, sodass anhaftendes Material an der Vorderseite des Schließkolbens und Kolbenstangenführung abgestreift wird und nicht in die Führung hineingezogen werden kann.

Ein Rohr verbindet einen Injektorkopf und eine Injektormündung. Im Bereich des Injektorkopfes mündet ein Anschlußstutzen zum Zuführen von vorgeschäumten Kunststoffpartikeln. In diesem Rohr erstreckt sich ein Injektorkanal von der Mündung des Anschlußstutzens am Rohr bis zur Injektormündung.

Bevorzugt ist vorgesehen, dass bevor ein Formraum neu befüllt wird, der Schließkolben vollständig aus dem Injektorkanal derart herausgezogen wird, dass der Injektorkanal frei ist. Dieser Zustand wird als Förderzustand bezeichnet.

Der Schließkolben wird vollständig in die Kolbenstangenführung und eine Durchgangsbohrung eines Führungsgehäusevorderteils derart hineingezogen, dass beim Zurückziehen des Schließkolbens an einer Mantelwandung des Schließkolbens anhaftendes Material an dem Führungsgehäusevorderteil abgestreift und nicht in die Kolbenstangenführung hineingezogen wird.

Dies ist möglich, da die Mantelwandung der Kolbenstange Durchmesser- und formgleich mit der Kolbenstangenführung bzw. dem Durchmesser der Durchgangsbohrung des Vorderteils ausgebildet ist.

In dieser Stellung, die als Ruhezustand bezeichnet wird, ist der Schließkolben vollständig aus dem Rohr derart herausgezogen, dass dieses frei ist.

Dadurch, dass die Kolbenstange in gleicher Stärke bzw. in gleichem Durchmesser wie der Kolben bzw. der Schließkolben selbst ausgebildet ist, ist keine umlaufende Kante und kein umlaufender Hinterschnitt am Übergang von Kolbenstange zu Schließkolben vorhanden an der bzw. dem Material anhaften kann. Ein solcher Schließkolben würde beim Zurückziehen an ein Vorderteil eines Antriebselementes anschlagen. Hierbei würde zwischen dem Schließkolben und dem Vorderteil Material eingepresst werden, wodurch es dauerhaft haftet und mit der Zeit die Funktion des Füllinjektors beeinträchtigt.

Darüber hinaus wird erfindungsgemäß das Basisteil am Vorderteil mittels Pass- bzw. Verriegelungsstiften verriegelt, sodass die Verbindung relativ schnell getrennt werden kann, wenn beispielsweise ein anderes Basisteil an ein Vorderteil angeordnet werden soll oder umgekehrt.

Darüber hinaus wird erfindungsgemäß der mündungsferne Endbereich des Vorderteils, mit dem das Vorderteil am Basisteil angesetzt wird, inklusive des Füllstutzens, welcher schräg seitlich absteht, einstückig ausgebildet, wodurch die Herstellung deutlich erleichtert wird. Hierdurch wird zudem die Dichtwirkung deutlich besser, das Bauteil wartungsarmer und stabiler.

Darüber hinaus sieht die Erfindung vor, dass der Injektor in einer Ausstoßerposition des Schließkolbens verriegelt werden kann. Die Schließposition des Schließkolbens ist dann erreicht, wenn der Schließkolben die Mündung verschließt und die Formen zum Erzeugen des Formteils geschlossen sind. Um das Formteil anschließend aus der Form auszuwerfen, fährt die gesamte Form mit dem Injektor gegen die Förderrichtung, wodurch die pneumatische Fördereinheit mit einer Anschlagplatte an ein festes Widerlager gefahren wird. Im Bereich der Fördereinheit bzw. des Basisteils werden sodann die pneumatische Fördereinrichtung gegen die Kraft von Federn gegen die Führungseinrichtung des Basisteils derart geführt, dass sich die Führungseinheit verkürzt und dadurch der Schließkolben vorne aus der Mündung herausgedrückt wird. Nach der vollständigen Verkürzung steht der Schließkolben über die Mündung heraus und eine Verriegelung der Führungseinrichtung kann mittels Passstiften erfolgen. Hierbei ist von Vorteil, dass eine erleichterte Wartung des Schließkolbens vorgenommen werden kann und insbesondere die auf derartigen Schließkolben üblicherweise verwendeten Dichtringe, welche Verschleißteile sind, ausgetauscht werden können.

Erfindungsgemäß sind diese O-Ringe oder Dichtringe aus farblosem, weißem oder nicht abfärbendem oder nicht kreidendem Material derart ausgebildet, dass eine Verfärbung des Kunststoffpartikelmaterials unterbleibt.

Das erfindungsgemäße Verfahren zur Herstellung eines Partikelschaumstoffteils umfasst insbesondere zudem die folgenden Schritte:
- Zuführen von Schaumstoffpartikel von einem Materialbehälter mittels einer Leitung zu einem Formwerkzeug, und
- thermoplastisches Verschweißen der Schaumstoffpartikel im Formwerkzeug zum Partikelschaumstoffteil unter Zuführung von Wärme.

Nach dem Verfahren kann den zuzuführenden Schaumstoffpartikeln Wasserdampf hinzugegeben werden.

Durch das Zugeben von Wasserdampf zu den Schaumstoffpartikeln werden diese mit Wasserdampf benetzt, wodurch sich deren Gleiteigenschaften verbessern. Die Benetzung der Oberfläche der Schaumstoffpartikel führt zu einer Verminderung der Adhäsionskräfte, so dass die Gefahr einer Verklumpung der Schaumstoffpartikel gering ist.

Die Zugabe von Wasserdampf bewirkt zudem eine Erwärmung der Schaumstoffpartikel, so dass die Schaumstoffpartikel bereits vorgewärmt sind, wenn sie in das Formwerkzeug gelangen. Das thermoplastische Verschweißen der Schaumstoffpartikel erfolgt hierdurch schneller und zuverlässiger.

Die Schaumstoffpartikel werden von dem Materialbehälter entlang eines Transportweges dem Formwerkzeug zugeführt, wobei vorzugsweise an mehreren Stellen entlang des Transportweges den Schaumstoffpartikeln Wasserdampf hinzugegeben wird. Die mit dem Wasserdampf zugeführte Wärmemenge muss so bemessen sein, dass die Schaumstoffpartikel nicht vor dem Erreichen des Formwerkzeuges vollständig aktiviert werden und bereits auf dem Transportweg miteinander verschweißt werden. Daher muss die Menge an Wasserdampf exakt dosiert werden. Die Menge des zuzuführenden Wasserdampfes hängt von unterschiedlichen Parametern ab, wie z.B. die Strömungsmenge der zuzuführenden Schaumstoffpartikel, die Querschnittsfläche und die Geometrie der Leitungen, dem Material der Schaumstoffpartikel, etc. Die Einstellung der zugeführten Menge an Wasserdampf erfolgt durch Einstellen des Druckes, mit welchen der Wasserdampf einer Düse zugeführt wird, mit welcher er in die Leitung des Transportweges eingespeist wird. Hierbei ist auch die Querschnittsfläche der Öffnung der Düse zu berücksichtigen. Grundsätzlich besteht auch die Möglichkeit, den Wasserdampf durch Verändern der Größe der Öffnung der Düse einzustellen.

Es gibt Materialzusammensetzungen auf Polyurethanbasis, die bereits bei 50° C klebrig werden. Schaumstoffpartikel, die aus solchem eTPU ausgebildet sind, sollten daher nicht über 50°C im Bereich des Transportweges erwärmt werden. Mit anderen Materialzusammensetzungen auf Polyurethanbasis sind höhere Temperaturen möglich.

Da einerseits die Schaumstoffpartikel nicht über eine bestimmte Temperatur im Transportweg erwärmt werden sollen und andererseits während des gesamten Transportweges Wasserdampf vorhanden sein sollte, ist es vorteilhaft, an mehreren Stellen entlang des Transportweges Wasserdampf zuzuführen. Hierdurch kann auch bereits kondensierter Wasserdampf ersetzt werden, so dass entlang des Transportweges eine in etwa gleichmäßige Wasserdampfbeaufschlagung erzielt wird.

Vorzugsweise wird die Menge an Wasserdampf derart eingestellt, dass an der Oberfläche aller Schaumstoffpartikel sich ein dünner Film aus kondensiertem Wasser bildet, der die Adhäsionswirkung der Wasserstoffpartikel herabsetzt. Je mehr Wasserdampf zugegeben wird, desto stärker werden die Oberflächen der Schaumstoffpartikel benetzt. Durch die Zugabe von Wasserdampf wird jedoch auch Wärme zugeführt, wobei die Wärmemenge nicht so groß sein darf, dass die Oberflächen der Schaumstoffpartikel aktiviert werden. Daher müssen bei der Bestimmung der Menge an Wasserdampf die entgegengesetzten Anforderungen aufgrund der Benetzung und der Vermeidung einer Aktivierung ausgeglichen werden.

Durch das Zugeben an mehreren Stellen entlang des Transportweges wird der Film immer wieder aufgefrischt, so dass möglichst über den gesamten Transportweg eine zuverlässige Förderung der Schaumstoffpartikel möglich ist.

Der Wasserdampf wird den Schaumstoffpartikeln vorzugsweise im Materialbehälter und/oder an einer in Transportrichtung dem Materialbehälter nachgeordneten Treibdüse und/oder an einem in Transportrichtung dem Formwerkzeug vorgeordneten Füllinjektor und/oder an einem oder mehreren Abschnitten der Leitung zugegeben. Insbesondere erfolgt die Zugabe an Stellen oder Bereichen vor Kurven und/oder Engstellen der Leitung vom Materialbehälter zum Formwerkzeug.

Der Wasserdampf wird vorzugsweise mit einer Temperatur von 100 bis 140 °C zugegeben.

Der Wasserdampf steht bei der Zugabe zu den Schaumstoffpartikeln vorzugsweise unter einem Druck, der dem Druck in dem Gefäß (Materialbehälter oder Förderleitung) entspricht, in dem sich die Schaumstoffpartikel befinden.

Die Menge des zugegebenen Wasserdampfes (bei 100°C und 1 bar) beträgt etwa das 20- bis 500-fache des Volumens des Formraums des Formwerkzeuges.

Vorzugsweise werden die Schaumstoffpartikel unter Druckerhöhung konditioniert, wobei die konditionierten Schaumstoffpartikel dem Materialbehälter zugegeben werden und dort unter einem bestimmten Druck vorgehalten werden. Der Druck im Materialbehälter liegt vorzugsweise im Bereich von 2 bis 5 bar. Durch das Konditionieren der Schaumstoffpartikel werden sie mit Luft beladen, die als Treibmittel wirkt. Da das Konditionieren allmählich erfolgt, beispielsweise über einen Zeitraum von 2 bis 24 Stunden, behalten die komprimierten Schaumstoffpartikel eine glatte Oberfläche.

Während des Zuführens von Schaumstoffpartikel vom Materialbehälter zum Formwerkzeug wird der Druck in der Leitung in dem Formwerkzeug derart eingestellt, dass er etwas geringer als im Materialbehälter ist. Hierdurch entsteht einerseits eine Strömung vom Materialbehälter zum Formwerkzeug und andererseits werden durch den Druck die Schaumstoffpartikel klein gehalten, so dass sie möglichst wenig miteinander kollidieren und die Gefahr, dass sie aneinander haften und verklumpen, gering gehalten wird. Im Formwerkzeug beträgt der Druck vorzugsweise etwa 0 bis 3 bar und insbesondere etwa 0,2 bis 1 bar weniger als im Materialbehälter. Bei Verwendung von Treibluft können die Schaumstoffpartikel auch gegen einen Gegendruck gefördert werden. So kann der Druck im Materialbehälter etwa 0,05 bis 0,15 bar kleiner als Formwerkzeug sein.

Die Schaumstoffpartikel können im Materialbehälter vereinzelt werden. Die Vereinzelung erfolgt beispielsweise durch Zuführen eines Gas- bzw. Luft- und/oder Dampfstroms, der die Schaumstoffpartikel im Materialbehälter verwirbelt. Dieser Gasstrom wird im Folgenden als Fluidisierungsstrom bezeichnet. Anstelle oder in Kombination mit einer Verwirbelung können zum Vereinzeln der Schaumstoffpartikel auch Vereinzelungswalzen, eine Zellenradschleuse, eine Revolverkammer, ein Siebboden (Zwischenboden) durch den die Partikel aufgrund einer Druckdifferenz oder (Rüttel-) Bewegung hindurchgepresst werden und/oder eine Schneckenfüllung vorgesehen sein.

Die Schaumstoffpartikel werden vorzugsweise zunächst vereinzelt der Förderleitung zugeführt und in der Förderleitung in einem Gasstrom, insbesondere Luftstrom, der mit dem Wasserdampf angereichert ist, möglichst mit Abstand zueinander transportiert, so dass die einzelnen Schaumstoffpartikel zuverlässig den Transportweg passieren und in das Formwerkzeug gelangen.

Der Verklumpung während des Transportes entgegenwirkende Mittel und Effekte sind nachfolgend aufgeführt, die einzeln oder in Kombination angewandt werden können:
- Hinzugeben von Wasserdampf zu den Schaumstoffpartikeln, wodurch die Adhäsionsfähigkeit der Schaumstoffpartikel herabgesetzt wird und deren Gleitvermögen erhöht wird.
- Fördern der Schaumstoffpartikel in einem erhöhten Druckniveau, wodurch deren Größe klein gehalten wird, wodurch die Packungsdichte in der Leitung gering gehalten werden kann und gleichzeitig ein hoher Strom von expandierenden Schaumstoffpartikeln pro Zeiteinheit erzielt wird. Die Schaumstoffpartikel können vor dem Fördern konditioniert werden oder auch unkonditioniert unter Druckbeaufschlagung gefördert werden.
- Vereinzeln der Schaumstoffpartikel im Materialbehälter, so dass die Schaumstoffpartikel mit möglichst wenig Kontakt mit anderen Schaumstoffpartikeln durch die Leitung transportiert werden.
- Beschichten der Schaumstoffpartikel mit einem Gleitmittel, wie z.B. Wachs.
- Einblasen eines Pulvers/Staubs als Gleitmittel zu den zu transportierenden Schaumstoffpartikeln. Dies wird vorzugsweise in Kombination mit einem Crackspaltwerkzeug angewandt, bei dem es möglich ist, das Pulver/den Staub vor dem Verschweißen durch den Spalt abzublasen.
- Bewegen, insbesondere Rütteln, der Leitung und/oder des Formwerkzeugs während des Befüllens. Die Leitung ist hierzu vorzugsweise als biegsamer Schlauch ausgebildet.

Da der Transport der Schaumstoffpartikel ein stochastisches System ist, kann nicht vollständig vermieden werden, dass einzelne Schaumstoffpartikel miteinander in Kontakt treten. Durch das Hinzugeben von Wasserdampf zu den Schaumstoffpartikeln wird verhindert, dass die miteinander in Berührung tretenden Schaumstoffpartikel nicht auf Dauer aneinander haften bleiben, verklumpen und die Leitung oder Bereiche des Formwerkzeuges versperren.

Grundsätzlich ist es auch möglich, nicht konditionierte Schaumstoffpartikel zu verwenden und/oder die Befüllung des Formwerkzeuges nicht unter Druck durchzuführen. Dann ist es zweckmäßig, wenn das Formwerkzeug aus zumindest zwei zueinander beweglichen Teilen besteht, so dass der Formraum nach dem Befüllen desselben durch Zusammenfahren der beiden Teile verringert werden kann, um die darin befindlichen Schaumstoffpartikel zu verdichten. Ein solches Formwerkzeug wird auch als Crack-Spalt-Formwerkzeug bezeichnet. Ein Crack-Spalt-Formwerkzeug kann auch grundsätzlich in Kombination mit einer Druckbefüllung vorgesehen sein, wobei dann jedoch die Verdichtung durch das Zusammenführen der beiden Teile des Formwerkzeuges nur um einen kleinen Weg ausgeführt wird, da durch die Druckbefüllung bereits eine hohe Befüllungsdichte erzielt wird. Bei manchen Kunststoffkörpern ist eine hohe Verdichtung mittels eines Crack-Spalt-Werkzeuges nachteilig. Dies gilt insbesondere bei Kunststoffkörpern mit unterschiedlicher Dicke, da dünnere Abschnitte wesentlich stärker als die dickere Abschnitte verdichtet werden. Eine solche ungleichmäßige Verdichtung ist normalerweise nicht erwünscht. Weiterhin entsteht ein anisotropes Schrumpfverhalten mit in Schließrichtung des Crackspaltes geringerem Schrumpf.

Für ein Druckbefüllen ist das Formwerkzeug mit einem dichten Formraum ausgebildet, wobei an den Formraum Druckventile angeschlossen sind, aus welchen die Treib- bzw. Füllluft beim Befüllen des Formwerkzeuges bei Erreichen eines bestimmten Druckes austritt.

Der zum Transport der Schaumstoffpartikel zugeführte Wasserdampf ist vorzugweise ein Sattdampf, d.h. ein gesättigter, trockener Dampf. An kalten Oberflächen, wie den noch nicht erwärmten Schaumstoffpartikeln, kondensiert der Wasserdampf zu Wasser. Da der Wasserdampf beim Kondensieren zu Wasser erheblich sein Volumen reduziert, entstehen durch das Zuführen von Wasserdampf keine Druck- bzw. Volumenprobleme.

Die Schaumstoffpartikel sind vorzugsweise aus expandierbarem, thermoplastischem Polyurethan (eTPU) ausgebildet. Das thermoplastische Polyurethan kann ein Polymer-Blend sein, der einen vorbestimmten Anteil an Polyurethan enthält. Ein solcher thermoplastischer Polymer-Blend ist aus der WO 2010/010010 A1 bekannt. Der Polymer-Blend enthält vorzugsweise einen Gewichtsanteil von zumindest 5% an Polyurethan und insbesondere vorzugsweise zumindest 50% an Polyurethan. Die Schaumstoffpartikel können auch aus einem Polymer-Blend mit einem Gewichtsanteil von zumindest 80% bzw. 90% Polyurethan ausgebildet sein. Auf die WO 2010/010010 A1 wird bezüglich der Ausbildung des Polymer-Blends vollinhaltlich Bezug genommen.

Die Schaumstoffpartikel können mit einem Treibmittel versehen sein. Geeignete Treibmittel sind bspw. Pentan, Butan oder CO₂ oder Gemische davon. Als Treibmittel können auch feste Treibmittel, wie Azolcarbonamid oder p-Toluolsulfonsäurehydracit, verwendet werden. Es können auch Schaumstoffpartikel verwendet werden, die keine Treibmittel aufweisen. Es hat sich überraschenderweise herausgestellt, dass sich durch die erfindungsgemäße Förderung mittels Dampf eine Schmierung des Schließkolbens des Injektors mittels Öl oder Fett nicht notwendig ist und eine völlig ausreichende Schmierung durch Dampfkondensat an der Schließkolbenoberfläche erfolgt.

Bei der Erfindung ist von Vorteil, dass durch eine Reihe von geeigneten Maßnahmen die Injektoren für das Injizieren von Partikelschaumstoffen in Formen zur Weiterverarbeitung wartungsfreundlicher und robuster ausgebildet werden.

Die Erfindung wird beispielhaft mit einer Zeichnung erläutert.

Es zeigen dabei:
Figur 1 einen erfindungsgemäßen Injektor in einer perspektivischen Ansicht;
Figur 2 den Injektor nach Figur 1 in einer teilgeschnittenen Seitenansicht;
Figur 3 den Injektor nach Figur 1 in einer Ansicht von vorne;

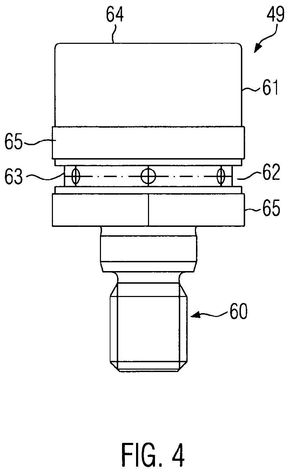

Figur 4 den Schließkolben in einer Ansicht von der Seite;
Figur 5 das Vorderteil in einer seitlichen Ansicht;
Figur 6 das Vorderteil in einer geschnittenen Ansicht;
Figur 7 das Basisteil in einer seitlichen teilgeschnittenen Ansicht;
Figur 8 das Basisteil in einer weiteren teilgeschnittenen Ansicht, zeigend den Schließkolben und die Kolbenstange;
Figur 9 schematisch eine Vorrichtung zur Herstellung eines Partikelschaumstoffteils in einem Blockschaltbild.

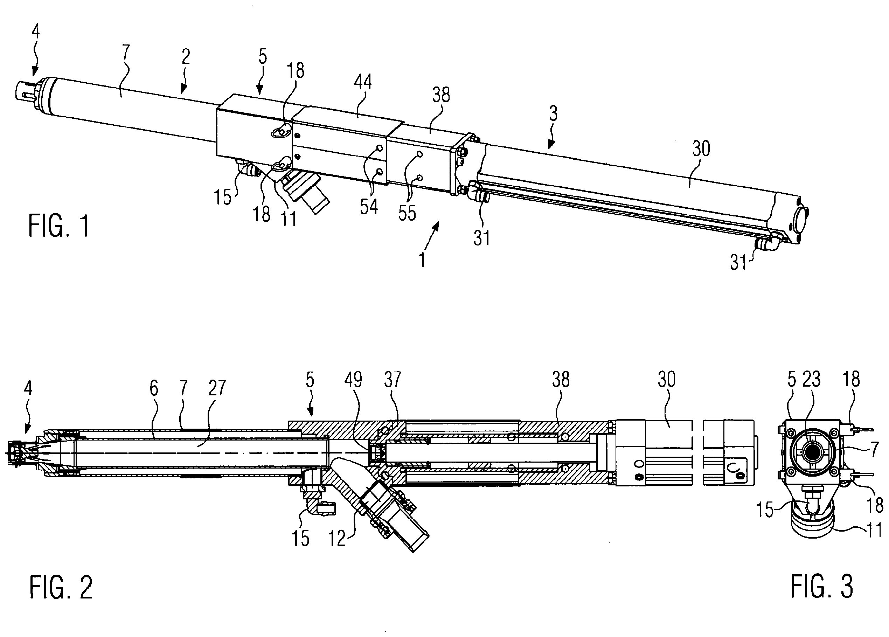

Ein erfindungsgemäßer Injektor 1 (Fig. 1 bis 3) besitzt ein Vorderteil 2 und ein Basisteil 3, welche axial in Wirkverbindung aneinander stoßend miteinander verbunden sind.

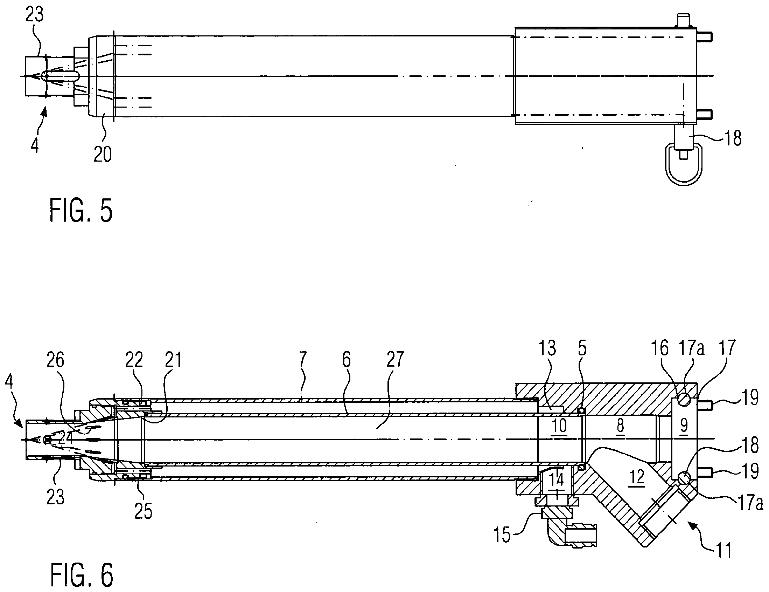

Das Vorderteil 2 (Fig. 5, 6) besitzt eine Injektormündung 4 und einen Injektorkopf 5. Der Injektorkopf 5 und die Injektormündung 4 sind mit einem ersten Rohr oder Innenrohr 6 miteinander axial beabstandet und verbunden, wobei um das Innenrohr 6 herum koaxial ein Mantelrohr 7 angeordnet ist.

Der Injektorkopf 5 ist ein im Wesentlichen rechteckiges Bauteil, welches über eine axiale Durchgangsöffnung 8 verfügt, wobei die axiale Durchgangsöffnung 8 von einem basisteilseitigen Anschlussbereich 9 zu einem mündungsseitigen Anschlussbereich 10 reicht und sich mündungsseitig treppenstufenartig erweitert.

Seitlich und erfindungsgemäß einstückig angesetzt ist an den Injektorkopf 5 ein in an sich bekannter Weise schräg zur Förderachse verlaufender Anschlussstutzen 11 angeordnet, welcher mit seiner Anschlussstutzenbohrung 12 in die Durchgangsöffnung 8 mündet. Das Innenrohr 6 ist vom Bereich 10 her in den Injektorkopf 5 eingeschoben und in diesem in geeigneter Weise befestigt, sodass das Innenrohr 6 die Durchgangsöffnung 8 in Richtung zur Injektormündung 4 fortsetzt. Zudem ist das Mantelrohr 7 mündungsseitig im Bereich 10 in den Injektorkopf 5 koaxial zum Innenrohr 6 eingeschoben angeordnet und geeignet befestigt. Um das Innenrohr 6 herum ist von dessen Mündung in den Injektorkopf 5 beabstandet eine radiale Erweiterung oder Nut 13 vorhanden, welche in dem Raum zwischen Innenrohr 6 und Mantelrohr 7 mündet. Von dieser Nut 13 ist eine radiale Bohrung 14 nach außen geführt, welche in einen Füllstutzen 15 mündet.

Im Bereich einer basisteilseitigen Mündung 9 erweitert sich die Durchgangsbohrung 8 mit einer Stufe 16 zu einem Aufnahmebereich 17. Im Aufnahmebereich 16 befinden sich zumindest zwei tangentiale Bohrungen oder Fräsungen im Injektorkopf zur Aufnahme von Passstiften 18, welche somit im eingesteckten Zustand im Bereich des Aufnahmebereichs 17 in den Aufnahmebereich 17 radial vorstehen. Zudem sind benachbart zum Aufnahmebereich 17 vorstehende Gewindebolzen 19 zur Verbindung des Vorderteils mit dem Basisteil vorgesehen.

Die Injektormündung 4 ist aus einem Injektormündungskörper 20 ausgebildet. Der Injektormündungskörper 20 ist im Wesentlichen zylindrisch ausgebildet und besitzt einen Aufnahmebereich 21 zur Aufnahme des Innenrohrs 6 und einen radial hiervon beabstandeten äußeren Aufnahmebereich 22 zur Aufnahme des Mantelrohres 7. Das Innenrohr 6 und das Mantelrohr 7 sind beispielsweise auf den Injektormündungskörper 20 auf- bzw. eingesteckt oder auf- bzw. eingeschraubt oder in sonstiger Weise am Mündungskörper 20 befestigt. Werkzeugseitig besitzt die Injektormündung ein Injektormündungsrohr 23, welches zum befestigenden Einschieben in ein entsprechendes Werkzeug bzw. eine entsprechende Bohrung eines Werkzeugs (nicht gezeigt) ausgebildet ist. Eine axiale Durchgangsöffnung 24 des Mündungskörpers 20 verengt sich von einem Aufnahmebereich 21 für das Innenrohr zum Mündungsrohr 23, sodass das Innenrohr 6 und das Mündungsrohr 23 unterschiedliche Durchmesser haben, wobei das Mündungsrohr 23 einen kleineren Durchmesser als das Innenrohr 6 aufweist. Hierdurch wird ein Führungstrichter bzw. Findungstrichter ausgebildet, der in schonender Weise den Kolben bzw. den Schließkolben aufnimmt und führt, wenn dieser in seine vordere, dichtende Position fährt. Hierdurch wird Verschleiß vermieden, insbesondere auch, wenn der Schließkolben nicht axial zentrisch in den Mündungsbereich gelangt. Der Mündungskörper 20 besitzt somit eine düsenartige Verengung. Von dem Raum zwischen dem Innenrohr 6 und dem Mantelrohr 7 sind axiale Bohrungen 25 nach vorne geführt, welche in etwa in der Axialmitte des Mündungskopfes radial nach innen führen und dann schräg nach vorne innen verlaufend ausgebildet sind, sodass längliche Mündungen 26 im sich verengenden Bereich der Durchgangsöffnung 24 angeordnet sind.

Hierbei wirken die Bauteile des Vorderteils 2 wie folgt zusammen:
Durch den Füllstutzen 15 und die Öffnung 14 wird Druckluft durch die Nuten 13 in den Raum zwischen dem Innenrohr 6 und dem Mantelrohr 7 geführt. Die Luft strömt sodann durch die Bohrungen 25 durch die Mündungen 26 vor dem Mündungsrohr 23 in den Bereich der Durchgangsöffnung 24, wodurch nach Art einer Venturidüse in dem Bereich des Innenrohres 6 bzw. der Durchgangsöffnung 8 des Injektorkopfes ein Unterdruck erzeugt wird. Durch diesen Unterdruck wird Kunststoffpartikelmaterial durch den Stutzen 11 und dessen Öffnung 12 in den Bereich der Durchgangsöffnung 8 bzw. den Bereich im Innenrohr 6 eingesaugt und durch das Mündungsrohr 23 in eine Form ausgeblasen.

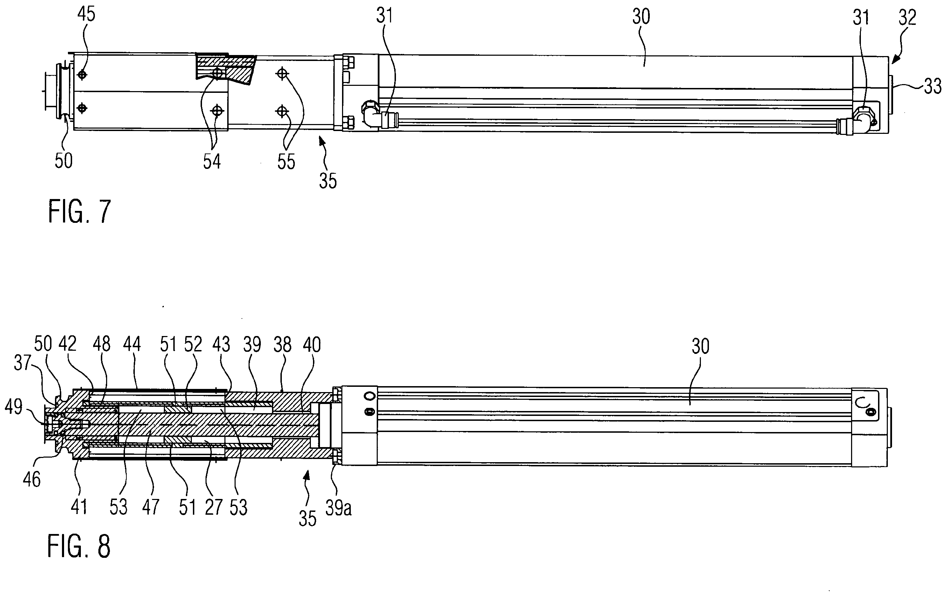

Das Basisteil 3 (Figuren 7, 8) besitzt ein an sich bekanntes pneumatisches Antriebselement 30, welches länglich im Querschnitt quadratisch ausgebildet ist und über zwei Druckluftanschlüsse 31 verfügt. Bei Betätigung der Druckluftanschlüsse wird ein Betätigungskolben (nicht dargestellt) in dem Antriebselement 30 nach vorne oder hinten bewegt. An den Betätigungskolben ist eine Kolbenstange 47 gekoppelt. Dieses Antriebselement 30 ist somit als Kolbenzylindereinheit ausgebildet. An dem vom Betätigungskolben entfernten Ende der Kolbenstange 47 ist ein Schließkolben angeordnet. An einem freien Ende 32 besitzt die pneumatische Antriebseinheit 30 eine Stoßplatte 33. Am gegenüber liegenden Ende 34 ist die pneumatische Antriebseinrichtung 30 an einer Führungseinrichtung 35 angeordnet. Die Führungseinrichtung 35 besitzt ein Führungsgehäuse 36 mit einem Führungsgehäusevorderteil 37 und ein Führungsgehäusehinterteil 38.

An Stelle des pneumatischen Antriebselements 30 kann auch ein hydraulisches oder elektrisches Antriebselement vorgesehen sein.

Das Führungsgehäusehinterteil 38 ist rechteckig mit einem insbesondere quadratischen Querschnitt ausgebildet und besitzt eine Durchgangsöffnung 39, wobei die Durchgangsöffnung 39 axial verläuft und sich von einer der pneumatischen Antriebseinheit zugewandten ersten Stirnfläche 39a zunächst zu einer Kolbenstangenführung 40 verengt und anschließend zu einem Führungsgehäusevorderteil 37 hin wieder erweitert. Das Führungsgehäusevorderteil 37 besitzt einen in gleicher Weise im Querschnitt in etwa quadratischen Kopplungsbereich 41, welcher von Durchmesser und Orientierung und äußerer Form her dem Führungsgehäusehinterteil 38 entspricht. Einander zugewandte Stirnkanten 42, 43 des Führungsgehäusevorderteils 37 und Führungsgehäusehinterteils 38 sind voneinander beabstandet und mit einer Hülse 44 nach außen abgedeckt, wobei die Hülse 44 mit Schrauben 45 am Führungsgehäusevorderteil 37 befestigt ist. Der Durchmesser der Durchgangsbohrung 39 im Bereich einer Kolbenstangenführung 40 bzw. der Durchmesser einer Durchgangsbohrung 46 des Führungsgehäusevorderteils 37 ist so bemessen, dass die Kolbenstange 47 hierin passgenau verschieblich geführt ist. Insbesondere ist eine Mantelwandung der Kolbenstange 47 Durchmesser- und formgleich mit der Kolbenstangenführung 40 bzw. dem Durchmesser der Durchgangsbohrung 46 des Führungsgehäusevorderteils 37. Um die Kolbenstange herum ist im Führungsgehäusevorderteil 37 eine Kunststoffführungshülse 48 angeordnet, welche einerseits die Kolbenstange 47 beim Verschieben führt, jedoch auch abdichtet. Der Schließkolben 49 ruht mit der Öffnung 46 abschließend im Führungsgehäusevorderteil 37.

Ein Rohr 6 verbindet einen Injektorkopf 5 und eine Injektormündung 4. Im Bereich des Injektorkopfes 5 mündet ein Anschlußstutzen 11 zum Zuführen von vorgeschäumten Kunststoffpartikeln. In diesem Rohr 6 erstreckt sich ein Injektorkanal 27 von der Mündung des Anschlußstutzens 11 am Rohr 6 bis zur Injektormündung 4.

Bevorzugt ist vorgesehen, dass bevor ein Formraum neu befüllt wird, der Schließkolben 49 vollständig aus dem Injektorkanal 27 derart herausgezogen wird, dass der Injektorkanal frei ist. Dieser Zustand wird als Förderzustand bezeichnet.

Der Injektorkanal 27 kann im Querschnitt quadratisch, rechteckförmig oder vieleckig ausgebildet sein. Der Schließkolben 49 kann im Querschnitt auch quadratisch, rechteckförmig oder vieleckig ausgebildet sein. Der Querschnitt des Schließkolbens entspricht dem Querschnitt der Kolbenstange 47, dem Querschnitt der Kolbenstangenführung 40 bzw. der Durchgangsbohrung 46 des Führungsgehäusevorderteils 37.

Das Führungsvorderteil 37 ist in dem aus der Hülse 44 vorstehenden Bereich rund ausgebildet mit einer Halbringnut 50. Der Durchmesser im Bereich der Halbringnut 50 entspricht dem Innendurchmesser des Injektorkopfes und insbesondere ist die Halbringnut 50 so bemessen, dass sie dem Durchmesser der Sicherungsstifte bzw. Passstifte derart entspricht, dass das Basisteil 3 axial in das Vorderteil 2 einschiebbar ist und die umlaufende Halbringnut 50 im Bereich der umlaufenden Kreisringnut 17a derart angeordnet ist, dass durch Einstecken der Passstifte die beiden Bauteile axial aneinander gehalten werden.

Zwischen dem Führungsgehäusevorderteil 37 und dem Hinterteil 38 ist koaxial um die Kolbenstange 47 herum eine teleskopierende Schiebehülse 51 mit Abstand angeordnet, wobei zwischen der teleskopierenden Schiebehülse und der Kolbenstange ein ringartiges Distanzstück 52 angeordnet ist, wobei das Distanzstück 52 sowohl vom Hinterteil als auch vom Vorderteil jeweils beabstandet ist und in den jeweiligen kreisringförmigen Hohlräumen Druckfedern 53 angeordnet sind.

Die Stirnkanten 42 des Führungsvorderteils 37 und die Stirnkanten 43 des Hinterteils 38 lassen sich gegen den Druck der Druckfedern 53 aufeinander zu verschieben, wobei das Hinterteil 38 in den Bereich der Hülse 44 gelangt. Die Hülse besitzt in einem Bereich benachbart zum Hinterteil je zwei Durchlassbohrungen 54 für Passstifte, wobei im Hinterteil im Bereich bzw. auf Höhe der Führung 40 ebenfalls zwei Bohrungen 55 vorhanden sind und die Bohrungen im eingeschobenen Zustand mit den Bohrungen 54 fluchtend ausgebildet sind.

Durch die axiale Anordnung des Vorderteils 2 an das Basisteil 3 ist es möglich, mittels der Pneumatik 30 die Kolbenstange 47 und den Schließkolben 49 axial durch das Innenrohr 6 zu führen, bis der Schließkolben 49 im Bereich des Mündungsrohres 23 mit dem Mündungsrohr 23 stirnseitig abschließend einen davor liegenden Formenhohlraum abschließt. Zum Auswerfen eines Formteiles wird die Form axial gegen das Vorderteil 2 bewegt, sodass das Führungsvorderteil 37 gegen den Druck der Federn 53 gegen das Führungsgehäusehinterteil 38 bewegt wird, sodass sich die Stirnkanten 42, 43 innerhalb der Führungsteilhülse 44 aufeinander zu bewegen. Da hierdurch der entsprechende Abstand verkürzt wird, gelangt der Schließkolben in gleicher Weise aus dem Bereich des Mündungsrohres 23 hinaus und drückt gegen ein Formteil. Gelangen die Bohrungen 54 der Führungsteilhülse 44 und die Bohrungen 55 in der Kolbenstangenführung 40 des Hinterteils 38 in Flucht, können diese durch Durchstecken von Sicherungsstiften (z.B. 18) daran gehindert werden, sich ohne Druck wieder auseinander zu bewegen, was dazu führt, dass der Schließkolben 49 dauerhaft aus dem Mündungsrohr 23 hinaussteht und für Wartungsarbeiten zugänglich ist.

Der Schließkolben 49 ist ein in an sich bekannter Weise aufgebautes, im Wesentlichen zylindrisches Bauteil mit einem Einsteckstutzen 60 zum Einstecken des Schließkolbens in die Vorderseite einer Kolbenstange. Zudem besitzt der Schließkolben 49 ein im Wesentlichen zylindrisches Führungsteil 61, wobei im zylindrischen Führungsteil 61 eine Gaszuführnut 62 ausgebildet ist. In der Gaszuführnut 62 sind Bohrungen 63 vorhanden, welche in das Innere des Schließkolbens reichen und dort mit einer axialen Bohrung (nicht gezeigt) in Verbindung stehen, welche zur Vorderseite 64 des Schließkolbens reicht, sich dort in an sich bekannter Weise erweitert und mit der Vorderseite eine sogenannte Schlitzdüse ausbildet. Hierbei kann in einem Zustand, in dem der Schließkolben 49 sich im Injektormündungsrohr 23 mit diesem abschließend befindet, Luft aus den länglichen Mündungen 26 in die Nut 62 und durch die Bohrungen 63 zur Vorderseite 64 des Schließkolbens geführt, um restliches Material in die Form einzublasen.

Der Schließkolben 49 besitzt zumindest eine radial umlaufende Dichtung 65, welche dichtend mit dem Mündungsrohr 23 und/oder der Öffnung 46 zusammenwirkt.

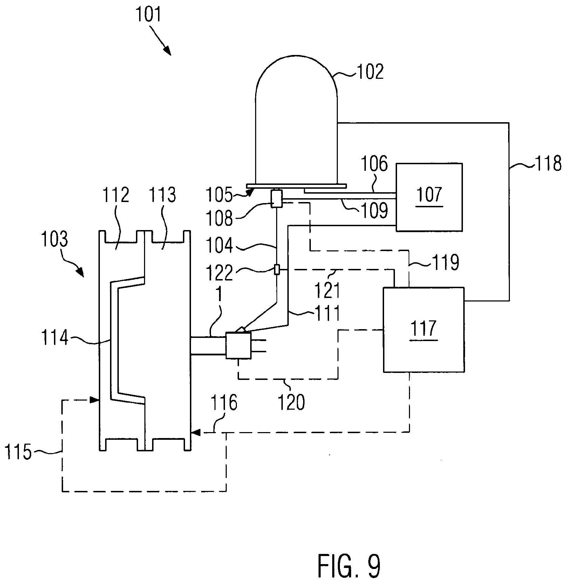

Ein erstes Ausführungsbeispiel einer erfindungsgemäßen Vorrichtung 101 zur Herstellung eines Partikelschaumstoffteils ist in Fig. 9 dargestellt.

Diese Vorrichtung 101 umfasst einen Materialbehälter 102, ein Formwerkzeug 103 und eine Leitung 104, die vom Materialbehälter 102 zum Formwerkzeug 103 führt.

Der Materialbehälter 102 dient zur Aufnahme loser Schaumstoffpartikel. Der Materialbehälter 102 weist einen Boden 105 auf, wobei er im Bodenbereich über eine Druckluftleitung 106 mit einer Druckluftquelle 107 verbunden ist. Die Druckluftleitung 106 ist mit mehreren im Boden 105 angeordneten Düsen (nicht dargestellt) verbunden, so dass in dem Materialbehälter 102 mehrere Luftströme eingeleitet werden können, die die darin befindlichen Schaumstoffpartikel verwirbeln und dadurch vereinzeln.

Im Bereich des Bodens 105 des Materialbehälters 102 ist die Förderleitung 104 an dem Materialbehälter 102 angeschlossen. Benachbart zum Materialbehälter 102 befindet sich in der Förderleitung 104 eine Treibdüse 108. Die Treibdüse 108 ist mit einer weiteren Druckluftleitung 109 mit der Druckluftquelle 107 verbunden. Die der Treibdüse 108 zugeführte Druckluft dient als Treibluft, da sie durch die Treibdüse 108 in die Förderleitung 104 eintritt und in Richtung zum Formwerkzeug 103 strömt. Hierdurch wird an der Treibdüse 108 an der zum Materialbehälter 102 weisenden Seite ein Unterdruck erzeugt, der aus dem Materialbehälter Schaumstoffpartikel ansaugt.

Die Förderleitung 104 mündet in einen Füllinjektor 1, der an das Formwerkzeug 103 gekoppelt ist. Der Füllinjektor 1 ist mit einer weiteren Druckluftleitung 111 mit der Druckluftquelle 107 verbunden. Die dem Füllinjektor 1 zugeführte Druckluft wird einerseits zum Füllen des Formwerkzeuges 103 verwendet, indem der Strom von Schaumstoffpartikeln mittels der Druckluft in Richtung zum Formwerkzeug 103 beaufschlagt wird. Andererseits kann die dem Füllinjektor 1 zugeführte Druckluft auch zum Zurückblasen der Schaumstoffpartikel aus der Förderleitung 104 in den Materialbehälter 102 verwendet werden, wenn der Füllvorgang am Formwerkzeug 103 abgeschlossen ist.

Das Formwerkzeug 103 ist aus zwei Formhälften 112, 113 ausgebildet. Zwischen den beiden Formhälften ist ein Formraum 114 begrenzt, in den der Füllinjektor 1 zum Einbringen der Schaumstoffpartikel mündet. Das Volumen des Formraums 114 kann durch Zusammenfahren der beiden Formhälften 112, 113 verringert werden, wobei darin befindliche Schaumstoffpartikel verdichtet werden. Bei auseinandergefahrenen Formhälften 112, 113 ist ein Spalt zwischen den Formhälften 112, 113 ausgebildet, der als Crack-Spalt bezeichnet wird. Deshalb wird ein solches Formwerkzeug 103 auch als Crack-Spalt-Formwerkzeug bezeichnet.

Die beiden Formhälften 112, 113 sind über Dampfleitungen 115, 116 mit einem Dampfgenerator 117 verbunden, um in den Formraum 114 Dampf zum Verschweißen der darin eingebrachten Schaumstoffpartikel zuzuführen.

Der Dampfgenerator 117 ist mit einer Dampfleitung 118 mit dem Materialbehälter 102 verbunden, um diesem Wasserdampf zuzuführen. Eine weitere Dampfleitung 119 führt vom Dampfgenerator 117 zur Treibdüse 108, so dass dem Strom von Schaumstoffpartikeln Wasserdampf zugeführt werden kann.

Mit einer Dampfleitung 120 ist der Dampfgenerator 117 mit dem Füllinjektor 1 verbunden, so dass dem durch den Füllinjektor 1 strömenden Strom an Schaumstoffpartikeln Wasserdampf zugeführt werden kann.

Es ist eine Dampfleitung 121 vorgesehen, die vom Dampfgenerator 117 zur Förderleitung 104 führt, wobei an einer entsprechenden Anschlussstelle 122 in der Förderleitung 104 eine Injektionsdüse (nicht dargestellt) vorgesehen ist, um Wasserdampf in die Förderleitung 104 einzubringen.

In den Dampfleitungen und Druckluftleitungen sind pneumatisch oder elektrisch ansteuerbare Ventile (nicht dargestellt) vorgesehen, so dass die zugeführte Druckluftmenge oder zugeführte Dampfmenge von einer Steuereinrichtung (nicht dargestellt) exakt gesteuert werden kann.

Nachfolgend wir die Funktionsweise der in Fig. 9 gezeigten Vorrichtung erläutert:
Zum Befüllen des Formwerkzeuges wird über die Druckluftleitung 106 im Bereich des Bodens 105 des Materialbehälters 102 Luft eingeblasen, um die darin befindlichen Schaumstoffpartikel zu verwirbeln und zu vereinzeln. Gleichzeitig wird der Treibdüse 108 Treibluft zugeführt, so dass aus dem Materialbehälter 102 Schaumstoffpartikel in die Förderleitung 104 gesaugt und mit der Treibluft in Richtung zum Formwerkzeug 103 transportiert werden. Über die Dampfleitung 118 wird vom Dampfgenerator 117 dem Materialbehälter 102 Wasserdampf zugeführt. Der Wasserdampf ist trockener Sattdampf, der mit dem im Materialbehälter 102 befindlichen Druck (ca. 1 bar) dem Materialbehälter 102 zugeführt wird. Vorzugsweise wird der Wasserdampf im Materialbehälter 102 benachbart zur Anschlussstelle der Förderleitung 104 in den Materialbehälter 102 eingedüst, so dass die in die Förderleitung 104 gesaugten Schaumstoffpartikel vom Wasserdampf benetzt werden.

Eine weitere Zufuhr von Wasserdampf zu dem Strom von Schaumstoffpartikeln erfolgt an der Treibdüse 108, an der Anschlussstelle 122 und am Füllinjektor 1.

Die Temperatur des trockenen Sattdampfes ist durch die Siedepunktkurve vom Wasserdampf festgelegt und somit durch den vorliegenden Druck vorgegeben. Bei einem Druck von etwa 1 bar in der Förderleitung 104 beträgt die Temperatur des Sattdampfes etwa 100°C.

Die Menge des Wasserdampfes muss so bemessen sein, dass die Schaumstoffpartikel an ihren Oberflächen nicht aktiviert werden und nicht in der Förderleitung 104 miteinander verschweißen. Bei Schaumstoffpartikeln auf Basis von Polyurethan liegt die Temperatur zum Verschweißen derselben bei etwa 80°C bis 130°C, wobei dies von der jeweils verwendeten Materialzusammensetzung abhängt. Die Menge des Wasserdampfes muss somit derart bemessen sein, dass die Schaumstoffpartikel nicht entlang des Transportweges vom Materialbehälter 102 zum Formwerkzeug 103 eine Temperatur von 90°C oder mehr erreichen.

Kommt der Wasserdampf mit den Schaumstoffpartikeln in Kontakt, dann kondensiert der Wasserdampf an der Oberfläche der Schaumstoffpartikel, da diese kälter sind und bildet einen dünnen Flüssigkeitsfilm. Dieser Flüssigkeitsfilm vermindert die Adhäsionskräfte zwischen den Schaumstoffpartikeln und erhöht deren Gleitfähigkeit. Hierdurch wird die Gefahr des Zusammenhaftens bzw. Verklumpens von Schaumstoffpartikeln erheblich reduziert und ein zuverlässiger Transport derselben durch die Förderleitung 104 sichergestellt.

Durch das Zuführen von Wasserdampf an mehreren Stellen entlang des Transportweges kann einerseits die lokale Wärmezufuhr an die jeweilige Zufuhrstelle von Wasserdampf ausreichend gering gehalten werden, um ein Aktivieren der Schaumstoffpartikel zu vermeiden, und andererseits sichergestellt werden, dass entlang des gesamten Transportweges die Schaumstoffpartikel ausreichend mit Feuchtigkeit benetzt sind. Hierdurch können die Schaumstoffpartikel zuverlässig dem Formraum 114 des Formwerkzeuges 103 zugeführt werden.

Nach dem Befüllen des Formraumes 114 mit Schaumstoffpartikeln wird der Füllinjektor 1 geschlossen. Die dem Füllinjektor 1 zugeführte Druckluft wird zum Zurückblasen der in der Förderleitung 104 befindlichen Schaumstoffpartikel in den Materialbehälter 102 verwendet. Während des Rückblasens wird vorzugsweise ein Fuidisierstrom dem Materialbehälter 102 zugeführt. Hierdurch wurde eine deutliche Reduzierung von Verstopfungen im Transportweg erzielt.

Durch Zusammenfahren der beiden Formhälften 112, 113 wird das Volumen des Formraums 114 verringert und werden die darin befindlichen Schaumstoffpartikel verdichtet.

Danach wird dem Formraum 114 Wasserdampf über die Leitung 115, 116 zugeführt, um die darin befindlichen Schaumstoffpartikel miteinander zu verschweißen. Die Zuführung von Wasserdampf kann auch bereits während des Zusammenfahrens und Verdichtens der Schaumstoffpartikel erfolgen. Das Zuführen von Wasserdampf erfolgt vorzugsweise zunächst bei geöffnetem Formraum (Crack-Spalt oder geöffnetes Ventil), so dass die in den Zwickelräumen befindliche Luft verdrängt und vollständig durch Wasserdampf ersetzt wird. Beim Spaltbedampfen wird das Material je nach Einstellung bereits teilweise bis vollständig verschweißt. Beim Spaltbedampfen wird vorzugsweise ein abgedichtetes, teleskopartig zusammenfahrendes Crackspaltwerkzeug verwendet. Wasserdampf leitet Wärme wesentlich besser als Luft, so dass dies zu einem schnelleren und gleichmäßigeren Verschweißen der Schaumstoffpartikel führt.

Als weitere vorteilhafte Bedampfungsvariante hat sich das Bedampfen mit Unterdruck (< 0,5 bar Absolutdruck) im Formwerkzeug herausgestellt. Dazu wird vor dem ersten Bedampfungsschritt der Unterdruck im Formwerkzeug aufgebaut und anschließend ein Querdampfschritt ausgeführt. Die reduzierte Luftmenge zwischen den Partikeln sorgt für einen guten Wärmeübergang. Durch das zusätzliche Druckgefälle von ca. 0,5 bar kann auch schon mechanisch komprimiertes eTPU (z.B. durch Crackspaltfüllen oder Gegendruckfüllen) vom Dampf durchströmt und verschweißt werden. Außerdem bleibt die Dampftemperatur ausreichend niedrig, sodass die Außenhaut des Formteils nicht vorzeitig gasdicht verschweißt wird, bevor die Innenbereiche verschweißt sind.

Bei einer hohen Verdichtung der Schaumstoffpartikel im Formwerkzeug kann es auch zweckmäßig sein, während des Bedampfens zumindest an einer Seite des Formwerkzeuges einen Unterdruck anzulegen. Vorzugsweise wird der Unterdruck an der Seite angelegt, die der Seite gegenüberliegt, an welcher der Wasserdampf dem Formwerkzeug zugeführt wird.

Nach dem Verschweißen der Schaumstoffpartikel zu einem Partikelschaumstoffteil wird die Zuführung von Wasserdampf abgestellt, das Formwerkzeug abgekühlt und zur Entnahme des Partikelschaumstoffteils geöffnet.

Danach beginnt das Verfahren erneut mit dem Befüllen des Formraumes 114 mit Schaumstoffpartikel.

Bevorzugt ist vorgesehen, dass bevor der Formraum 114 neu befüllt wird, der Schließkolben 49 vollständig in die Kolbenstangenführung 40 bzw. die Durchgangsbohrung 46 des Vorderteils 37 hineingezogen wird, dass das Rohr 6 frei ist. Beim Zurückziehen des Schließkolbens 47 wird an der Mantelwandung des Schließkolbens 47 anhaftendes Material an dem Führungsgehäusevorderteil 37 abgestreift und nicht in die Kolbenstangenführung 40 hineingezogen wird.

Dies ist möglich, da die Mantelwandung der Kolbenstange 47 durchmesser- und formgleich der Kolbenstangenführung 40 bzw. dem Durchmesser der Durchgangsbohrung 46 des Führungsgehäusevorderteils 37 entsprechend ausgebildet ist.

Diese Stellung wird als Ruhezustand bezeichnet.

Das oben erläuterte Ausführungsbeispiel weist vier Stellen auf, an welchen Wasserdampf den Schaumstoffpartikeln hinzugegeben wird. Dies sind der Materialbehälter 102, die Treibdüse 108, die Anschlussstelle 122 und der Füllinjektor 1. Im Rahmen der Erfindung ist es selbstverständlich auch möglich, die Anzahl und den Ort der Stellen, an welchen entlang dem Transportweg der Schaumstoffpartikel Wasserdampf zugegeben wird, zu variieren. Dies hängt vor allem von den individuellen Transportparametern (Durchmesser der Förderleitung 104, chemische Zusammensetzung der Schaumstoffpartikel, Fördergeschwindigkeit, Druck des Treibgases, Anzahl der Kurven von Engstellen in der Förderleitung 104, etc.) ab. So kann es zweckmäßig sein, lediglich an einer einzigen Stelle, insbesondere dem Materialbehälter 102 oder an der Treibdüse 108 Wasserdampf zuzugeben. Andererseits kann es auch zweckmäßig sein, mehrere Anschlussstellen an der Förderleitung 104 vorzusehen, an welchen jeweils eine Dampfleitung angeschlossen ist.

### Bezugszeichenliste

- 1: Injektor
- 2: Vorderteil
- 3: Basisteil
- 4: Injektormündung
- 5: Injektorkopf
- 6: Innenrohr
- 7: Mantelrohr
- 8: axiale Durchgangsöffnung
- 9: basisteilseitiger Anschlussbereich
- 10: mündungsseitiger Anschlussbereich
- 11: Anschlussstutzen
- 12: Anschlussstutzenbohrung
- 13: radiale Erweiterung/Nut
- 14: radiale Bohrung
- 15: Füllstutzen
- 16: Stufe
- 17: Aufnahmebereich
- 17a: Kreisringnut
- 18: Passstifte
- 19: Gewindebolzen
- 20: Injektormündungskörper
- 21: Aufnahmebereich
- 22: äußerer Aufnahmebereich
- 23: Injektormündungsrohr
- 24: Durchgangsöffnung
- 25: Bohrungen
- 26: Mündungen
- 27: Injektorkanal
- 28 29 30: pneumatisches Antriebselement
- 31: Druckluftanschlüsse
- 32: freies Ende

- 33: Stoßplatte
- 34: Ende
- 35: Führungseinrichtung
- 36: Führungsgehäuse
- 37: Führungsgehäusevorderteil
- 38: Führungsgehäusehinterteil
- 39: Durchgangsöffnung
- 39a: Stirnfläche
- 40: Kolbenstangenführung
- 41: Kopplungsbereich
- 42: Stirnkante
- 43: Stirnkante
- 44: Hülse
- 45: Schrauben
- 46: Durchgangsbohrung
- 47: Kolbenstange
- 48: Kunststoffführungshülse
- 49: Schließkolben
- 50: Halbringnut
- 51: Schiebehülse
- 52: Distanzstück
- 53: Druckfedern
- 54: Durchlassbohrungen
- 55: Durchlassbohrungen
- 56 57 58 59 60: Einsteckstutzen
- 61: Führungsteil
- 62: Gaszuführnut
- 63: Bohrungen
- 64: Vorderseite
- 101: Vorrichtung

- 102: Materialbehälter
- 103: Formwerkzeug
- 104: Förderleidung
- 105: Boden
- 106: Druckluftleitung
- 107: Druckluftquelle
- 108: Treibdüse
- 109: Druckluftleitung
- 111: Druckluftleitung
- 112: Formhälfte
- 113: Formhälfte
- 114: Formraum
- 115: Dampfleitung
- 116: Dampfleitung
- 117: Dampfgenerator
- 118: Dampfleitung
- 119: Dampfleitung
- 120: Dampfleitung
- 121: Dampfleitung
- 122: Anschlussstelle

## Patentansprüche

1. Injektor zum Befüllen einer Form mit Kunststoffpartikeln mit einem Vorderteil (2) und einem Basisteil (3), wobei das Vorderteil (2) eine formseitige Mündung (23) und eine Zuführung für Druckluft (15) und eine Zuführung für Kunststoffpartikel (11) besitzt und das Basisteil (3) axial in Förderrichtung hinter dem Vorderteil (2) angesetzt ist und das Basisteil (3) eine Kolbenzylindereinheit (30, 37, 38), eine Kolbenstangenführung (40) und ein Führungsgehäusevorderteil (37) mit einer axial in Förderrichtung vorne liegendem Durchgangsbohrung (46) besitzt, wobei ein Schließkolben (49) zum Verschließen der formseitigen Mündung (23) durch das Vorderteil (2) axial bewegbar ist, wobei, der Schließkolben (49) und die den Schließkolben vorderseitig tragende Kolbenstange (47) durchmessergleich oder im Wesentlichen durchmessergleich ausgebildet sind, **dadurch gekennzeichnet, dass** der Schließkolben (49) vollständig in die Kolbenstangenführung (40) und die Durchgangsbohrung (46) des Führungsgehäusevorderteils (37) hineinziehbar ist, wobei anhaftendes Material an der Vorderseite des Schließkolbens (47) abgestreift und nicht in die die Kolbenstangenführung (40) hineingezogen werden kann.

2. Injektor nach Anspruch 1,
**dadurch gekennzeichnet, dass**
Vorderteil (2) und Basisteil (3) über eine Steckverbindung mit korrespondierenden Halbringnuten und diese durchgreifenden Steck- oder Passstiften (18) verbunden sind.

3. Injektor nach Anspruch 1 oder 2,
**dadurch gekennzeichnet, dass**
am Vorderteil (2) im Bereich zwischen der Zuführung für Kunststoffpartikel (11) und der formseitigen Mündung (23) ein Injektorkanal (27) ausgebildet ist, und der Schließkolben (49) derart betätigbar ist, dass er in einem Förderzustand vollständig aus dem Injektorkanal (27) herausgezogen ist, so dass der Injektorkanal (27) frei ist.

4. Injektor nach einem der vorhergehenden Ansprüche,
**dadurch gekennzeichnet, dass**
das Basisteil (3) ein pneumatisches, hydraulisches oder elektrisches Antriebselement (30) besitzt und axial in Förderrichtung davor eine Führungseinrichtung (35) für den Schließkolben (49) und die Kolbenstange (47), wobei die Führungseinrichtung ein Führungsgehäuse besitzt und in dem Führungsgehäuse angrenzend an das Vorderteil der Führungsgehäusevorderteil (37) ausgebildet ist, der eine Durchgangsbohrung (46) besitzt, in der im Ruhezustand der Schließkolben (49) mit der Durchgangsbohrung (46) abschließend ruht.

5. Injektor nach einem der Ansprüche 1 bis 4,
**dadurch gekennzeichnet,**
**dass** die Kolbenstange (47) in der Durchgangsbohrung (46) pass- und formgenau verschieblich, vorzugsweise passgenau verschieblich abdichtend geführt ist.

6. Injektor nach einem der vorhergehenden Ansprüche,
**dadurch gekennzeichnet, dass**
der Schließkolben (49) radial umlaufend zumindest eine Dichtung besitzt, wobei die Dichtung farblos oder nicht kreidend oder nicht färbend ausgebildet ist.

7. Injektor nach einem der vorhergehenden Ansprüche,
**dadurch gekennzeichnet, dass**
der Injektorkopf (5) des Vorderteils (2) einen seitlich angesetzten Anschlussstutzen (11) zum Anschließen eines Kunststoffpartikelspeichers besitzt, wobei der Injektorkopf (5) und der Anschlussstutzen (11) einstückig ausgebildet sind.

8. Vorrichtung zur Herstellung eines Partikelschaumstoffteils mit dem Injektor nach einem der Ansprüche 1 bis 7, umfassend
- einen Materialbehälter (2, 25),
- eine Förderleitung (4), die an den Materialbehälter (2, 25) angeschlossen ist um aus diesen Partkelschaumstoffe abzufördern,
- ein Formwerkzeug (3) mit einem Formraum (14), an das die Förderleitung (4) mittels eines Füllinjektors (10) angeschlossen ist, so dass Schaumstoffpartikel aus dem Materialbehälter entlang eines Transportweges zum Formwerkzeug gefördert werden können,
- einen Dampfgenerator (17) zum Zuführen von Wasserdampf in den Formraum (14) zum thermoplastischen Verschweißen der Schaumstoffpartikel im Formraum (14) zu einem Partikelschaumstoffteil, wobei der Dampfgenerator (17) mit zumindest einer Dampfleitung (18, 19, 20, 21) mit dem Materialbehälter (2, 25) und/oder einer Einrichtung entlang dem Transportweg angeschlossen ist, um die dem Formwerkzeug zuzuführenden Schaumstoffpartikel mit Wasserdampf zu beaufschlagen.

9. Verfahren zur Herstellung eines Partikelschaumstoffteils mit einer Vorrichtung nach Anspruch 8 oder einem Injektor nach einem der Ansprüche 1 bis 7, umfassend folgende Schritte
- Zuführen von Schaumstoffpartikeln von einem Materialbehälter mittels einer Leitung zu einem Formwerkzeug,
- thermoplastisches Verschweißen der Schaumstoffpartikel im Formwerkzeug zum Partikelschaumstoffteil unter Zuführung von Wärme,
wobei den zuzuführenden Schaumstoffpartikeln Wasserdampf hinzugegeben wird.

10. Verfahren nach Anspruch 9, wobei die Schaumstoffpartikel von dem Materialbehälter entlang eines Transportweges dem Formwerkzeug zugeführt werden, wobei an mehreren Stellen entlang des Transportweges den Schaumstoffpartikeln Wasserdampf hinzugegeben wird.

11. Verfahren nach Anspruch 9 oder 10, wobei der Wasserdampf den Schaumstoffpartikeln im Materialbehälter und/oder an einer in Transportrichtung dem Materialbehälter nachgeordneten Treibdüse und/oder an einem in Transportrichtung dem Formwerkzeug vorgeordneten Füllinjektor und/oder an einem Abschnitt der Leitung, insbesondere im Bereich vor einer Kurve und/oder Engstelle zugegeben wird.

12. Verfahren nach einem der Ansprüche 9 bis 11, wobei Wasserdampf zum Transportieren mit einer Temperatur von 100 bis 140 °C und/oder mit einem Druck von 1 bis 5 bar zugegeben wird.

13. Verfahren nach einem der Ansprüche 9 bis 12, wobei das Wasserdampfkondensat im Injektor zur Schmierung der Kolbenstange und des Schließkolbens im Injektorkopf und in der Injektormündung verwendet wird.

## Claims

1. Injector for filling a mould with plastic particles, with a front part (2) and a base part (3), wherein the front part (2) has a mould-side orifice (23) and a feed for compressed air (15) and a feed for plastic particles (11), and the base part (3) is attached axially in the direction of conveyance behind the front part (2) and has a piston-cylinder unit (30, 37, 38), a piston rod guidance (40) and a guidance housing front part (37) with a through bore (46) disposed axially in front in a transport direction, wherein a closing piston (49) for closing the mould-side orifice (23) is axially movable through the front part (2), wherein the closing piston (49) and the piston rod (47) carrying the closing piston on its front are designed with an identical or substantially identical diameter, **characterised in that** the closing piston (49) can be dragged completely into the piston rod guidance (40) and the through bore (46) of the guidance housing front part (37), wherein material adhering to the front side of the closing piston (47) can be stripped and cannot be drawn into the piston rod guidance (40).

2. Injector according to claim 1,
**characterised in that**
the front part (2) and the base part (3) are connected via a plug-in connection with corresponding half ring grooves and plug-in or dowel pins (18) passing through them.

3. Injector according to claim 1 or 2,
**characterised in that**
an injector passage (27) is formed in the front part (2) in the area between the feed pipe for plastic particles (11) and the mould-side orifice (23), and the closing piston (49) may be so actuated that, in a conveyance mode, it may be completely withdrawn from the injector passage (27), so that the injector passage (27) is free.

4. Injector according to any of the preceding claims,
**characterised in that**
the base part (3) has a pneumatic, hydraulic or electrical drive element (30) and axially ahead of the latter in transport direction a guide device (35) for the closing piston (49) and the piston rod (47), wherein the guide device has a guide housing (36) and in the guide housing (36) adjacent to the front part there is formed the guide housing front part (37), with a through bore (46) in which in the resting state the closing piston (49) rests with the through bore (46) sealed.

5. Injector according to claim 4,
**characterised in that**
the piston rod (47) is guided in the through bore (46) with precisely fitting movement capability, preferably with precisely fitting and sealing movement capability.

6. Injector according to any of the preceding claims,
**characterised in that**
the closing piston (49) has at least one radially continuous seal, wherein the seal is colourless or non-chalky or non-staining.

7. Injector according to any of the preceding claims,
**characterised in that**
the injector head (5) of the front part (2) has a connection nozzle (11) attached at the side for connecting a plastic particle store, wherein the injector head (5) and the connection nozzle (11) are formed in one piece.

8. Apparatus for the production of a particle foam part with the injector according to any of claims 1 to 7, comprising
- a material container (2, 25)
- a conveyor pipe (4) connected to the material container (2, 25) to convey particle foam from it
- a mould (3) with a mould cavity (14), to which the conveyor pipe (4) is connected by means of a filling injector (10), so that foam particles may be conveyed from the material container along a conveyance path to the mould
- a steam generator (17) for feeding steam into the mould cavity (14) for thermoplastic welding of the foam particles in the mould cavity (14) to make a particle foam part
wherein
the steam generator (17) is connected by at least one steam line (18, 19, 20, 21) to the material container (2, 25) and/or a device along the conveyance path, in order to supply steam to the foam particles being conveyed to the mould.

9. Method of producing a particle foam part with an apparatus according to claim 6 or an injector according to any of claims 1 to 5, comprising the following steps
- feeding of foam particles from a material container to a mould by means of a pipe
- thermoplastic welding of the foam particles in the mould to make a particle foam part under the supply of heat
wherein steam is added to the foam particles to be conveyed.

10. Method according to claim 7,
wherein
the foam particles are fed to the mould from the material container along a conveyance path, wherein steam is added at several points along the conveyance path.

11. Method according to claim 7 or 8,
wherein
the steam is added to the foam particles in the material container and/or at a blowing nozzle downstream of the material container in the direction of conveyance and/or at a filling injector upstream of the mould in the direction of conveyance and/or at a section of the pipe, in particular in the area before a curve and/or a narrow point.

12. Method according to any of claims 1 to 3
wherein
steam for conveyance is added at a temperature of 100 to 140°C and/or with a pressure of 1 to 5 bar.

13. Method according to any of claims 7 to 10
wherein
the steam condensate in the injector is used to lubricate the piston rod and the closing piston in the injector head and in the injector orifice.

## Revendications

1. Injecteur de remplissage d'un moule avec des particules de plastique avec une partie avant (2) et une partie de base (3), dans lequel la partie avant (2) présente embouchure du côté du moule (23) et une conduite d'alimentation en air comprimé (15) et une alimentation de particules de matière plastique (11) et la partie de base (3) est axialement fixée derrière la partie avant (2) dans la direction de transport, et la partie de base (3) a une unité piston-cylindre (30, 37, 38), un guidage de tige de piston (40) et une partie avant de boîtier de guidage (37) avec un alésage (46) disposé axialement à l'avant dans la direction de transport, dans lequel un piston de fermeture (49) destiné à fermer l'embouchure du côté de moule (23) à travers la partie avant (2) est axialement mobile, dans lequel le piston de fermeture (49) et la tige de piston (47) portant le piston de fermeture à l'avant sont formés de même diamètre ou sensiblement de même diamètre formé, **caractérisé en ce que** le piston de fermeture (49) peut être tiré complètement au-dedans du guidage de la tige de piston (40) et l'alésage (46) de la partie avant du boîtier de guidage (37), durant quoi du matériau adhérent peut être enlevé côté avant du piston de fermeture (47) et ne peut pas être tiré dans le guidage de tige de piston (40).

2. Injecteur selon la revendication 1,
**caractérisé en ce que**
la partie avant (2) et la partie de base (3) sont connectées par le moyen d'une connexions enfichables avec des rainures semi-annulaires et des fiches de contact et goujons (18) traversant celles-ci.

3. Injecteur selon la revendication 1 ou 2,
**caractérisé en ce que**
à la partie avant (2) dans la région entre l'alimentation de particules de matière plastique (11) et l'embouchure du côté du moule (23) un canal d'injecteur (27) est formé, et le piston de fermeture (49) est susceptible d'être effectué de façon à être complètement tiré en dehors du canal d'injecteur (27) dans un état de transport, de façon à ce que le canal d'injecteur (27) est libre.

4. Injecteur selon l'une quelconque des revendications précédentes,
**caractérisé en ce que**
la partie de base (3) a un élément de moteur (30) pneumatique, hydraulique ou électrique et, axialement dans la direction de transport là devant un dispositif de guidage (35) pour le piston de fermeture (49) et la tige de piston (47), dans lequel le dispositif de guidage a un boîtier de guidage et dans le boîtier de guidage voisinant la partie avant la partie avant du boîtier de guidage (37) est formée, qui a un alésage (46), dans lequel à l'état de repos le piston de fermeture (49) repose en fermant avec l'alésage (46).

5. Injecteur selon l'une quelconque des revendications 1 à 4,
**caractérisé en ce que**
la tige de piston (47) est guidé dans l'alésage (46) déplaçable sur mesure et adaptée à la forme, de préférence déplaçable en étanchant sur mesure est adaptée à la forme.

6. Injecteur selon l'une quelconque des revendications précédentes,
**caractérisé en ce**
**que** le piston de fermeture (49) comporte au moins un joint circulant radialement, dans lequel le joint est formé incoloré ou ne laissant pas de traces ou ne laissant pas de couleur.

7. Injecteur selon l'une quelconque des revendications précédentes,
**caractérisé en ce que**
la tête d'injecteur (5) de la partie avant (2) a un manchon de raccordement (11) pour le raccordement d'un stock de particules de matière plastique, dans lequel la tête injecteur (5) et le manchon de raccordement (11) sont formés en une pièce.

8. Dispositif pour la fabrication d'une pièce de mousse de particules avec l'injecteur selon l'une quelconque des revendications 1 à 7, comportant
- un récipient de matériau (2, 25),
- un conduit de transport (4) qui est raccordé au récipient de matériau (2, 25) pour transporter des mousses de particules à partir de celui-ci,
- un outil de moulage (3) avec un espace de moulage (14) auxquels un conduit de transport (4) est raccordé par le moyen d'un injecteur de remplissage (10), de façon à ce que des particules de matière plastique peuvent être transportés à partir du récipient de matériau le long d'un chemin de transport vers l'outil de moulage,
- un générateur de vapeur (17) pour l'alimentation de vapeur dans l'espace de moulage (14) pour le soudage thermoplastique des particules de matière plastique dans l'espace de moulage (14) pour faire une pièce de mousse de particules,
dans lequel
le générateur de vapeur (17) est raccordé au récipient de matériau (2, 25) et / ou un dispositif le long du chemin de transport avec au moins un conduit de vapeur (18, 19, 20, 21) pour ajouter de la vapeur aux particules de matière plastique à être alimentés à l'outil de moulage.

9. Procédé pour la fabrication d'une pièce en mousse de particules avec un dispositif selon la revendication 8 ou un injecteur selon l'une quelconque des revendications 1 à 7, comprenant les étapes consistant en
- la fourniture des particules de mousse à partir d'un récipient de matériau par l'intermédiaire d'un conduit à un outil de moulage,
- le soudage thermoplastique des particules de mousse dans l'outil de moulage pour faire la pièce de mousse de particules tout en suppliant de la chaleur,
dans lequel de la vapeur d'eau est ajoutée aux particules de mousse à être alimentés.

10. Procédé selon la revendication 9,
dans lequel
les particules de mousse sont alimentés à partir du réservoir de matériau le long d'un trajet de transport vers l'outil de moulage, dans lequel, à plusieurs endroits le long du trajet de transport, de la vapeur d'eau est ajoutée aux particules de matière plastique

11. Procédé selon la revendication 9 ou 10,
dans lequel la vapeur d'eau est ajoutée aux particules de mousse dans le récipient de matériau et / ou dans la direction de transport dans une buse d'entraînement en aval du récipient de matériau et / ou dans la direction de transport dans un injecteur de remplissage en amont de l'outil de moulage et / ou sur une partie du conduit, en particulier dans la région précédant une courbe et / ou une gorge.

12. Procédé selon l'une quelconque des revendications 9 à 10,
dans lequel
de la vapeur d'eau est ajoutée pour le transport à une température de 100 à 140 °C et / ou avec une pression de 1 à 5 bar.

13. Procédé selon l'une quelconque des revendications 9 à 12,
dans lequel
le condensat de vapeur d'eau dans l'injecteur est utilisé pour la lubrification de la tige de piston et du piston de fermeture dans la tête d'injecteur et dans l'orifice de l'injecteur.
